# EUROPEAN PATENT SPECIFICATION

(11) **EP 0 660 618 B1**
(45) Date of publication and mention of the grant of the patent: **13.01.1999**
(21) Application number: 94308668.6
(22) Date of filing: 23.11.1994
(51) Int. Cl.: H04N 9/31, H04N 5/74, G02F 1/00

(54) **Image projection using optically controlled light modulation**
Bildprojektion mit optisch angesteuertem Lichtmodulator
Projection d'images utilisant la modulation de lumière avec contrôle optique

(30) Priority: 22.12.1993 JP 324928/93
(43) Date of publication of application: 28.06.1995
(73) Proprietor: MATSUSHITA ELECTRIC INDUSTRIAL CO., LTD., Kadoma-shi, Osaka 571-8501 (JP)
(72) Inventor: Yamagishi, Shigekazu, Takatsuki-shi, Osaka 569 (JP); Miyatake, Yoshito, Neyagawa-shi, Osaka 572 (JP); Miyai, Hiroshi, Takarazuka-shi, Hyogo 665 (JP)
(74) Representative: Crawford, Andrew Birkby

(56) References cited:
- EP-A- 0 436 738
- PATENT ABSTRACTS OF JAPAN vol. 17, no. 609 (P-1640) 9 November 1993 & JP-A-05 188 340 (FUJITSU LTD)

## Description

### BACKGROUND OF THE INVENTION

### (1)Field of the Invention

The present invention relates to a picture display apparatus which converts an input light image into a projected picture using the photoelectric effect.

### (2)Description of the Prior Art

As a picture display apparatus using an electro-optical device, a configuration transferring an image on the picture display device onto the photoconductive layer of the electro-optical device through a usual transfer lens has been principally used. However, although the transferred image quality is not so deteriorated, the transfer lens itself is big and moreover the transfer distance is necessary to be long and it results in a big apparatus. To solve the above problem, a configuration directly coupling the picture display device and the photoconductive layer through an optical fiber plate composed of bundled optical fibers each having a diametre of several micrometers and different refractive index values from center to periphery, instead of a usual transfer lens. By using an above- mentioned optical fiber plate, the distance required for transfer can be made shorter than several centimeters and it results in a smaller apparatus.

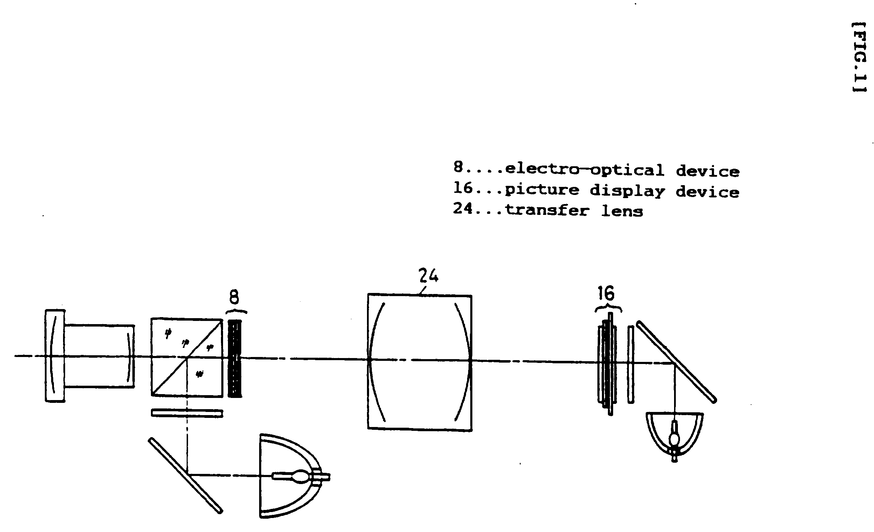

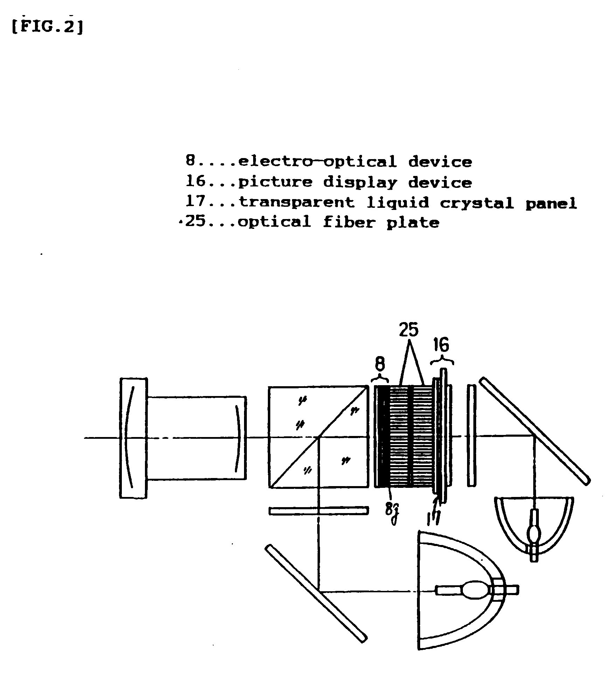

Two typical examples of a picture display apparatus using an electro-optical device in accordance with the prior art are explained below. One is a configuration which transfers an image through a transfer lens 24 and shown in FIG.1. Another is a configuration which transfers an image through an optical fiber plate 25. The former (shown in FIG.1) has a good resolution but requires a long transfer distance (between the picture display device 16 and the electro-optical device 8), as is obvious from FIG.1, and has a big transfer lens 24 for obtaining good brightness, and it results in a big and expensive apparatus. The latter (shown in FIG.2) can transfer an image with a shortest optical fiber plate 25 and the aperture of the optical fiber plate 25 can be made big. Therefore, the picture is bright but the picture resolution is remarkably deteriorated unless the image surface of the transparent liquid crystal panel 17 is tightly contacted to the surface of the optical fiber plate 25. Accordingly, it is necessary to change the glass basement 8g of the electro-optical device 8 to an optical fiber plate and form an electro-optical device on the optical fiber plate 25 but because of bad production yield of both optical fiber plates and electro-optical devices, the whole aparatus becomes expensive. Connecting the optical fiber plate of the electro-optical device 8 side and the optical fiber plate of the picture display device 16 side, some moiré occurs between each adjacent fibers of the bundled optical fiber plate and it results in picture quality deterioration.

An optical fiber plate has three big problems.
(1) The first problem is deterioration of a transferred image. The aperture rate of optical fiber plate can be made big but the image surface must be tightly contacted to prevent defocussing due to some gap between the image surface and the optical fiber plate surface. Therefore, the part in which the light does not pass through the fiber, that is the space between the two adjacent fibers of the bundled optical fiber plate appears like a net on the picture and it deteriorates the picture quality and has possibility to generate moiré between the net pattern and the displayed picture. Moreover, if there is some slant between fibers when a lot of optical fibers are bundled, brightness non-uniformity occurs and the picture quality deteriorates remarkably.
(2) The second problem is productivity and reliability of the apparatus. As mentioned above, because it is undesirable to place the optical fiber plate apart from the picture plane of the picture display device, the picture plane of the picture display device must be provided directly on the optical fiber plate plane as well as the photoconductive layer of the electro optical device must be attached directly on the optical fiber plate plane. Because the production yield of electro optical devices is not good at present and direct coupling between an electro-optical device and a picture display device without using a glass plate therebetween increases mechanical stress, the production yield of this part becomes worse.
(3) The third problem is productivity of optical fiber plate itself. The number of man-hours for producing an optical fiber plate is big due to the structure of the optical fiber plate and the production yield is bad due to break or slant of the fiber. It results in extremely high cost.

EP-A-0 436 738 discloses an arrangement such as is described above with an optical fiber plate integrally, constructed with a cathode ray tube forming the picture display device. A transparent liquid layer is disposed between the optical fiber plate and an electro-optical device including a liquid crystal layer.

JP-A-5 188 340 discloses a large screen display using image forming means including a graded index lens for image mapping between optic planes.

The present invention provides a picture display apparatus using an electro-optical device comprising:
a picture display device;
an image transfer device composed of a plurality of elongate lenses bundled in parallel to their optical axes;
an electro-optical device composed of a liquid crystal layer and a photoconductive layer;
said electro-optical device being arranged to convert an input optical image from said picture display device transferred via said image transfer device to a projected picture by exploiting the photoelectric effect, and wherein
said image transfer device is placed in the optical path between said electro-optical device and said picture display device, characterised in that
said plurality of lenses is a plurality of graded index lenses, and in that
a liquid layer is provided between the image transfer device and the picture display device so that the picture on the display device is transferrable in equisize onto said photoconductive layer of said electro-optical device.

The mechanical distance between the image transfer device and the picture display device is made adjustable or the mechanical distance between the electro-optical device and the image transfer device is made adjustable so that the optical distance between the image transfer device and the picture display device does not vary, even when the liquid temperature varies and the refractive index value of the liquid varies.

In addition, the image transfer optical unit can be formed so that the space between the picture display device and the parallel surface glass plate provided between the electro-optical device and the image transfer device is filled with liquid and the liquid is made convectable in the spaces between the parallel surface glass plate and the image transfer device and between the image transfer device and the picture display device.

According to the present invention, the light path length required for image transfer can be shorter and the size of the transfer lens can be made smaller than those of usual transfer lens and it results in remarkable reduction of the whole apparatus size. In addition, because there is no contact between the picture display plane and the image transfer device and between the photoconductive layer of the electro-optical device and the image transfer device, there is no mechanical stress, no temperature stress and no problem in productivity and reliability.

Because the image transfer device of the present invention can be regarded as an assembly of small transfer lenses, a pattern of the image transfer device does not appear on the transferred picture like in the case of optical fiber plate. As a result, a good transferred picture can be obtained.

The diameter of a graded index lens composing an image transfer device of the present invention is about 1 millimeter, while the diameter of an optical fiber composing an optical fiber plate is several micrometers. Accordingly, the productivity and handling of the image transfer device is better and there is no problem in the productivity of the image transfer device.

Thus, according to the present invention, the image transfer device and the optical path length required for image transfer can be remarkably shortened and the whole apparatus size can be made small. There is no problem in the productivity and the whole apparatus cost can be made lower.

### BRIEF DESCRIPTION OF THE DRAWINGS

FIG.1 illustrates a configuration of a picture display apparatus using an electro-optical device which transfers an image through a transfer lens in accordance with the prior art.

FIG.2 illustrates a configuration of a picture display apparatus using an electro-optical device which transfers an image through an optical fiber plate in accordance with the prior art.

FIG.3 illustrates another configuration of a picture display apparatus using an electro-optical device, similar to a first exemplary embodiment of the present invention.

FIG.4 illustrates a configuration of an electro-optical device for use in a picture display apparatus, in accordance with the first exemplary embodiment of the present invention.

FIG.5 illustrates a configuration of an image transfer device for use in a picture display apparatus in accordance with the first exemplary embodiment of the present invention.

FIG.6 illustrates a configuration of a picture display apparatus using an electro-optical device which uses a cathode ray tube as a picture display device, as may be used in the first exemplary embodiment of the present invention.

FIG.7 illustrates a configuration of a picture display apparatus using an electro-optical device in accordance with the first exemplary embodiment of the present invention.

FIG.8 illustrates a first example of the image transfer optical unit considering temperature compensation used in a picture display apparatus using an electro-optical device in accordance with the first exemplary embodiment of the present invention.

FIG.9 illustrates a second example of the image transfer optical unit considering temperature compensation used in a picture display apparatus using an electro-optical device in accordance with the first exemplary embodiment of the present invention.

FIG.10 illustrates a third example of the image transfer optical unit considering temperature compensation used in a picture display apparatus using an electro-optical device in accordance with the first exemplary embodiment of the present invention.

FIG.ll illustrates a fourth example of the image transfer optical unit considering temperature compensation used in a picture display apparatus using an electro-optical device in accordance with the first exemplary embodiment of the present invention.

FIG.12 illustrates a configuration of a picture display apparatus using an electro-optical device in accordance with a second exemplary embodiment of the present invention.

### DETAILED DESCRIPTION OF THE INVENTION

### (First exemplary embodiment)

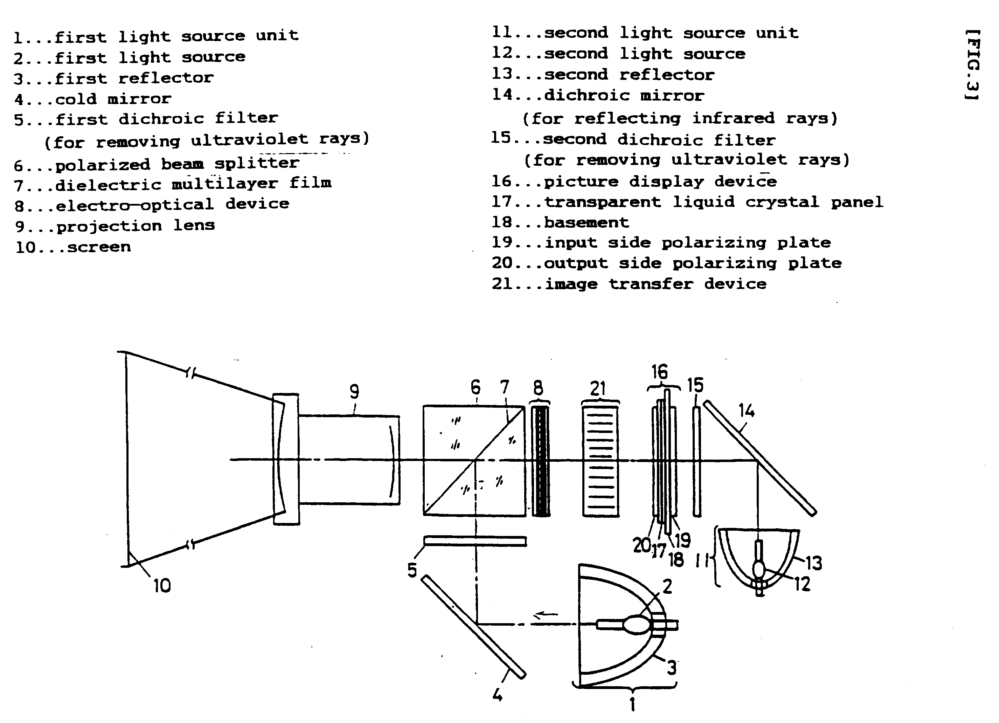

A configuration of a picture display apparatus using an electro-optical device, similar to a first exemplary embodiment of the present invention is illustrated in FIG.3.

A first light source unit 1 is composed of a first light source 2 and a first reflector 3 reflecting the light emitted from the first light source 2 towards the aperture direction in parallel to the reflector axis. In the light emitted from the first light source 2, the infrared component is removed by a cold mirror 4 provided aslant against the light axis of the light reflected at the first light source unit 1. The light being reflected at the cold mirror 4 and having excluded the infrared rays passes through the first dichroic filter 5 for removing ultraviolet rays which is located on the light path and the ultraviolet rays are removed here. After being reflected at the cold mirror 4 and passing through the first dichroic filter 5, the light is composed of only visible ray and the visible ray goes into a polarizing beam splitter 6.

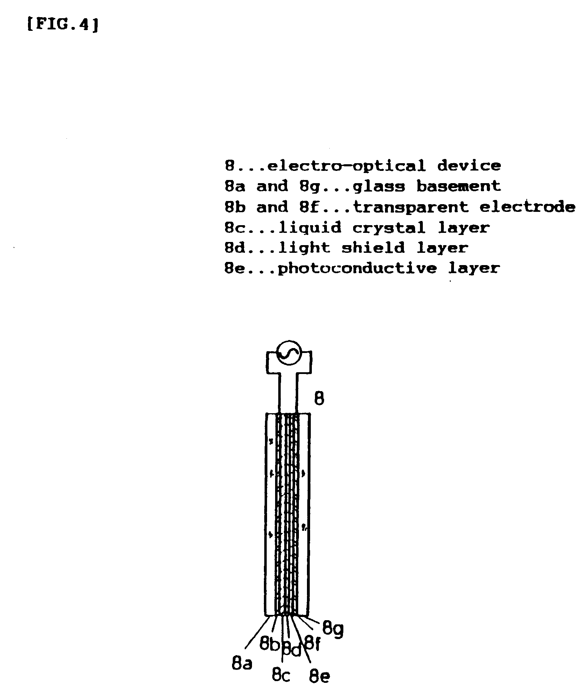

The polarizing beam splitter 6 is made by providing a dielectric multilayer film 7 at the boundary surface between two glasses or by providing a parallel surface glass plate with a dielectric multilayer film in liquid. The incoming light and the polarized light which oscillates in the parallel direction to the light incoming plane including the perpendicular line to the dielectric multilayer film 7 (hereafter, called P polarized light) passes through the dielectric multilayer film 7. The polarized light which oscillates in the perpendicular direction to the P polarized light (hereafter, called S polarized light) is reflected at the dielectric multilayer film 7. Accordingly, in the visible ray incoming into the polarizing beam splitter 6, the P polarized light is led to the outside of the light path and only the S polarized light is reflected at the dielectric multilayer film 7 and goes into an electro-optical device 8. The electro-optical device 8 is composed of glass basements 8a and 8g, transparent electrodes 8b and 8f, a liquid crystal layer 8c, a light shield layer 8d and a photoconductive layer 8e as shown in FIG.4. When there is no incoming light to the photoconductive layer 8e, the majority part of the applied voltage is applied to the photoconductive layer 8e because the resistance of the photoconductive layer 8e is larger than that of the liquid crystal layer 8c and a photoelectric effect does not occur in the liquid crystal layer 8c. When light comes into the photoconductive layer 8e, the resistance of the photoconductive layer 8e decreases and a voltage is applied to the liquid crystal layer 8c and a photoelectric effect occurs in the liquid crystal layer 8c.

Accordingly, when the photoconductive layer 8e is not illuminated, the S polarized light led by the polarized beam splitter 6 is reflected by the light shield layer 8d after passing through the glass basement 8a, the transparent electrodes 8b and the liquid crystal layer 8c. The reflected light advances in the inverse direction, that is through the liquid crystal layer 8c, the transparent electrode 8b and the glass basement 8a in order and comes again into the polarizing beam splitter 6. Because no photoelectric effect occurs in the liquid crystal layer 8c, the polarizing direction does not change and the light is S polarized light as it is and is reflected at the dielectric multilayer 7 as explained above and does not go to the projection lens 9.

When the photoconductive layer 8e is illuminated, the S polarized light led by the polarized beam splitter 6 is reflected by the light shield layer 8d after passing through the glass basement 8a, the transparent electrode 8b and the liquid crystal layer 8c and the reflected light advances through the liquid crystal layer 8c, the transparent electrodes 8b and the glass basement 8a in order and comes again into the polarizing beam splitter 6. However, because photoelectric effect occurs in the liquid crystal layer 8c, the polarizing direction changes by 90 degrees and the light becomes P polarized light and the light passes through the dielectric multilayer 7 as explained above and goes into the projection lens 9.

The projection lens 9 is placed on the position to project and enlarge the image on the electro-optical device 8. The light passing through the liquid crystal layer 8c corresponding to the illuminated area on the photoconductive layer 8e is projected on the screen 10 through the projection lens 9 and the corresponding area becomes white on the screen 10.

On the other hand, the light passing through the liquid crystal layer 8c corresponding to the not-illuminated area on the photoconductive layer 8e does not come to the projection lens 9 and the corresponding area becomes black on the screen 10.

Thus, if an image is optically written in the photconductive layer 8e, the image is projected on the screen through the projection lens 9.

Next, an optical system for writing the image in the photconductive layer 8e is explained. Similarly to the first light source unit 1, a second light source unit 11 is composed of a second light source 12 and a second reflector 13 reflecting the light emitted from the second light source 12 towards the aperture direction in parallel to the reflector axis. The light output of the second light source 12 is made smaller than that of the first light source 2.

A part of infrared rays in the light emitted from the second light source 12 is reflected at the dichroic mirror 14 and the ultraviolet rays which can not perfectly removed is removed at the second dichroic filter 15 and only the part of infrared rays comes into the picture display device 16. The picture display device 16 is composed of a transparent liquid crystal panel 17, a basement 18 which provides a driving circuit (not shown in the drawings) and an aperture larger than the panel aperture at the position corresponding to the aperture of the transparent liquid crystal panel 17, an input side polarizing plate 19 which has a light passing axis in the directions which the polarizing directions are orthogonal each other at the input side and the output side of the transparent liquid crystal panel 17 and an output side polarizing plate 20.

When there is no signal or a white signal is given from the outside, the light passing through the input side polarizing plate 19 passes through the output side polarizing plate 20 being twisted its polarizing direction by 90 degrees by the liquid crystal.

When a black signal is given from the outside, the light passing through the input side polarizing plate 19 does not change its polarizing direction independent of liquid crystal and is absorbed by the output side polarizing plate 20 and shielded. A picture can be displayed by partially changing the variation of the polarizing direction according to the signal.

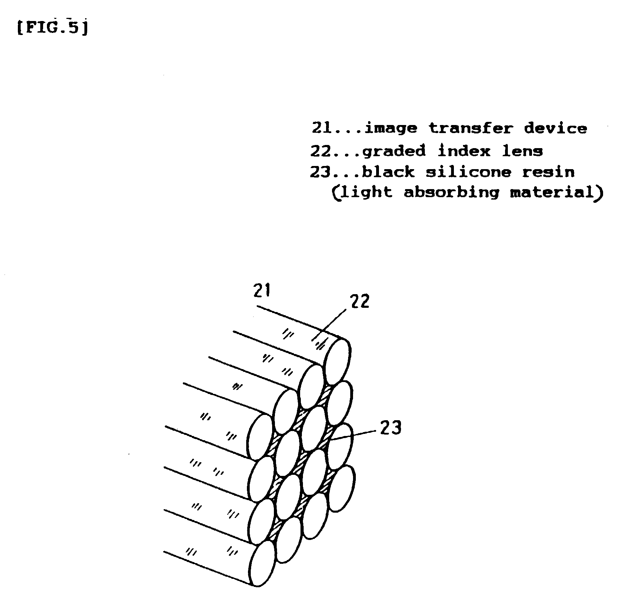

The light which is emitted from the second light source and passes through the area corresponding to the white display on the picture display device 16 comes to the image transfer device 21. The image transfer device 21 is placed on the optical axis connecting the picture display device 16 and the electro-optical device 8 and is composed of a plurality of tubular graded index lenses 22 (Fig.5) which are bundled in parallel to the optical axis and the gaps between each adjacent lens are filled with black silicone resin 23 as light absorbing material in order to absorb the harmful light leaked from the lenses. The graded index lens 22 has decreasing refractive index distribution from the center to the periphery and the length of the lens (in the optical axis direction) is designed so that an erecting equisized image is obtained at the designated wave length of the light.

Because the transparent liquid crystal panel 17 is placed on the position corresponding to the object plane of the image transfer device 21 so that the photoconductive layer 8e of the electro-optical device 8 comes to the position corresponding to the image plane, the light passing through the white display area of the picture display device 16 arrives at the photoconductive layer 8e and the erecting image of the picture displayed on the transparent liquid crystal panel 17 is transferred to the photoconductive layer 8e.

Thus, the picture on the transparent liquid crystal panel 17 is projected on the screen 10 by a combination of the electro-optical device 8, the polarizing beam splitter 6 and the projection lens 9.

According to the first exemplary embodiment of the present invention, the image transfer device 21 is considered as an assembly of small transfer lenses and its axial length can be shortened compared with the case using a transfer lens 24. Although it is inferior compared with an optical fiber plate 25, the aperture is easy to make large compared with that of a transfer lens 24 and a bright transferred image is obtained.

Because the image transfer device 21 needs not contact tightly the electro-optical device 8 or the picture display device 16 like an optical fiber plate 25, it has merit in productivity. Assemblies of graded index lenses with one or two line array are used in image transfer machines such as copying machines or facsimile machines and they have no problem as to productivity. Thus, picture display apparatuses with bright and high resolution picture are obtained with lower price and better productivity.

Infrared rays are used as wrighting light in this exemplary embodiment, it is not restricted to infrared rays but is designed to match the optimum wave length of the electro-optical device.

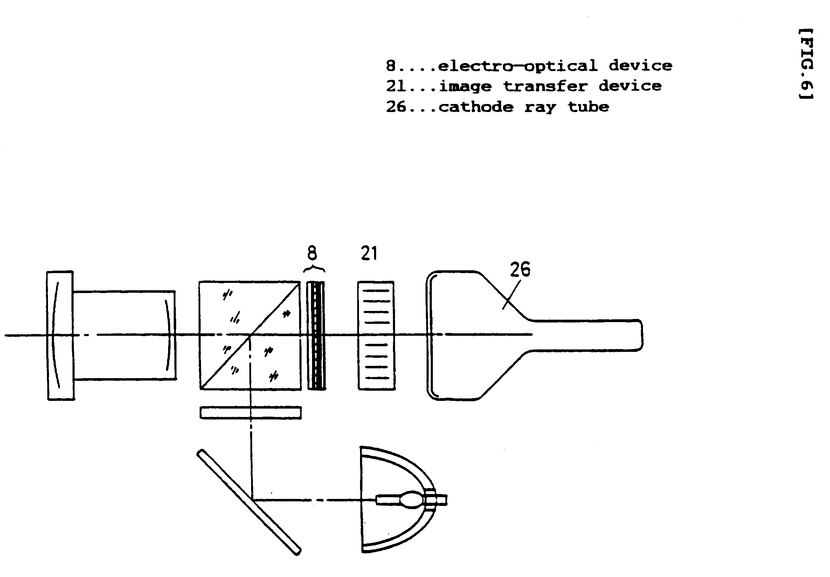

As shown in FIG.6, the second light source unit 11, the dichroic mirror 14, the second dichroic filter 15 and the picture display device 16 are replaceable with a cathode ray tube 26. Because the picture display plane must be placed in the focal depth of the image transfer device 21, the cathode ray tube must have a flat face. The phosphor of the cathode ray tube must have a light emitting characteristic matching the characteristic of the electro-optical device 8.

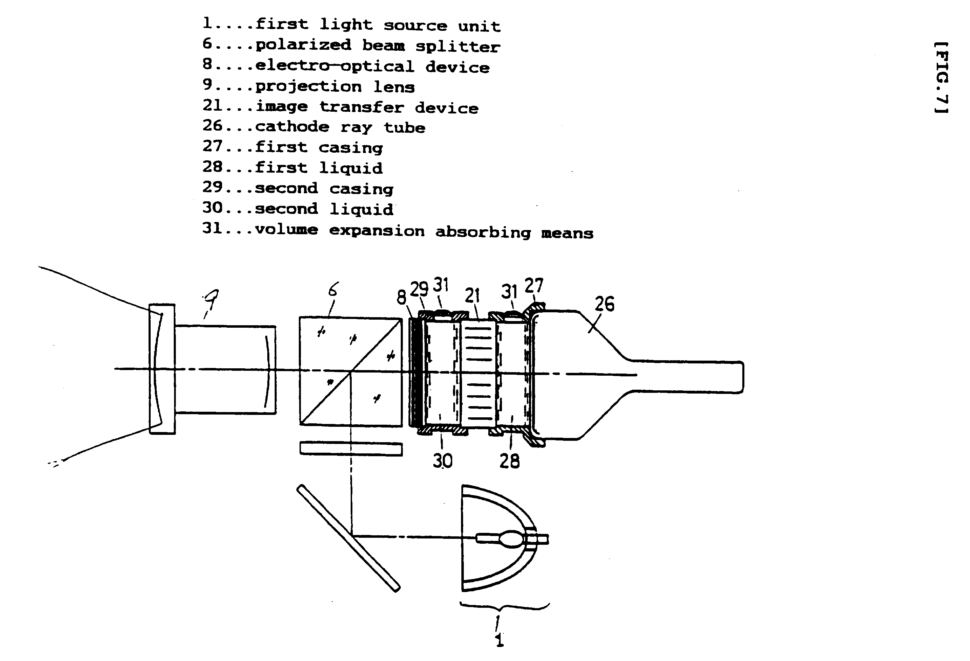

A configuration of a picture display apparatus using an electro-optical device in accordance with the first exemplary embodiment of the present invention is illustrated in FIG.7.

The first exemplary embodiment has a similar configuration to the arrangement shown in Fig.6 in having a reading optical system, that is a first light source unit 1, a polarized beam splitter 6, an electro-optical device 8 and a projection lens 9 but has a cathode ray tube 26 with a flat face plate instead of a writing optical system, that is a second light source unit 11, a dichroic morror 14, a second dichroic filter 15 and a picture display device 16. The cathode ray tube 26 as a picture display device and the image transfer device 21 are combined with a first casing 27 which has apertures facing to the picture display face of the cathode ray tube 26 and the input side effective area of the image transfer device 21 and the inside of the first casing 27 is filled with first liquid 28 and there is no air between the cathode ray tube 26 and the image transfer device 21.

The image transfer device 21 and the electro-optical device 8 are similarly combined with a second casing 29 which has apertures facing to the output side effective area of the image transfer device 21 and the effective area of the photoconductive layer 8e of the electro-optical device 8 and the inside of the second casing 29 is filled with second liquid 30 and there is no air between the image transfer device 21 and the electro-optical device 8. Because the liquid 28 and 30 bring volume variation according to their temperature change, volume expansion (shrinkage) absorbing means 31 is provided in both the first casing 27 and the second casing 29.

According to the first exemplary embodiment, the difference from the glass in a refractive index is reduced by replacing air layer to liquid 28 and 30 and the decreasing of the penetration rate due to the reflection at the boundary face and the deterioration of the contrast of the transferred iamge due to the drifting light can be suppressed and a good picture can be obtained.

When the liquid temperature variation is not so big, the above-mentioned configuration has no problem. But when the liquid temperature variation is big, the refractive index of the liquid varies according to the liquid temperature rise and the optical path length varies and thus, it results in deterioration of the transferred image quality. Especially, the majority of the temperature rise is caused by heat dissipation of the cathode ray tube 26 and the temperature of the first liquid 28 between the cathode ray tube 26 and the image transfer device 21 becomes higher than that of the second liquid 30 between the image transfer device 21 and the electro-optical device 8. The first liquid 28 accompanies volume variation due to the temperature rise as well as variation of the refractive index. For example, when ethylene glycol is used for the first liquid 28, if the refractive indices of e-ray (546 nanometer) at 23 degrees C and 40 degrees C are defined as n₁ and n₂, respectively and the length in optical axial direction of the first liquid 28 as d₁, the optical path length substantially varies by(1/n₁ - 1/n₂) ∗ d1compared with the optical path length at 23 degrees C.

Because${\text{n}}_{\text{1}} {\text{=1.4337 and n}}_{\text{2}} \text{=1.4228,} {\text{(1/n}}_{\text{1}} {\text{- 1/n}}_{\text{2}} {\text{) ∗ d}}_{\text{1}} {\text{= 0.0054∗d}}_{\text{1}} \text{.}$

The optical path length varies by 0.0054∗d₁ and the distance between the object plane and the image transfer device 21 varies and the distance between the image transfer device 21 and the image plane of the electro-optical device 8 also varies and thus, it results in deterioration of the transferred image formed on the photoconductive layer 8e. Because the image transfer device 21 is composed of a plurality of tubular graded index lenses, if the optical distance d2 between the picture display plane of the picture display device and the input side plane of the image transfer device 21 is different from the optical distance d3 between the output side plane of the image transfer device 21 and the photoconductive layer 8e, the relation (d2 : d3 = 1 : 1) is not held and the images of the adjacent lenses partly overlap and it results in remarkable deterioration of the picture quality. Even if the optical distances d2 and d3 get deviated from the designed values, if the difference between the two optical distances d2 and d3 is small, the influence to the picture quality is smaller than the case in which either of d2 or d3 is near to the designed value but another is largely deviated from the designed value.

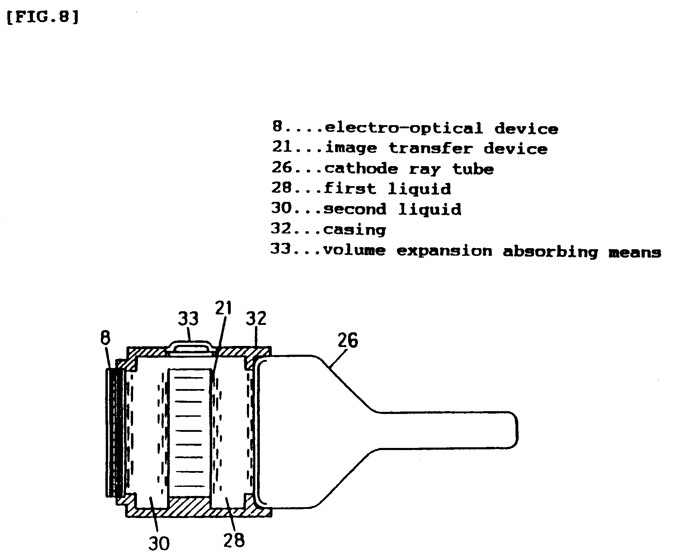

A first example of the image transfer means considering temperature compensation used in a picture display apparatus using an electro-optical device in accordance with the first exemplary embodiment of the present invention is illustrated in FIG.8.

Accordingly, when there is big heat dissipation, the termperature distribution is made uniform by designing the casing 32 larger enough than the effective part of the image transfer device 21 so that the liquid 28 and 30 can convect, as shown in FIG.8. That is, even if the temperature variation occurs, the difference between d2 and d3 hardly becomes large and the picture quality deterioration of the transferred image can be suppressed. It is obvious that if any means to forcedly convect the liquid in the casing 32 is provided, better effect can be obtained.

The casing 32 is composed of one piece and the liquid can convect in the casing and means such as a radiator is provided to the casing 32 for heat exhaust. Moreover, forced air cooling by a fan can decrease the temperature difference between the liquid 28 between the picture display plane and the image transfer device 21 and the liquid 30 between the image transfer device 21 and the electro-optical device 8. As a result, a good image can be transferred onto the photoconductive layer 8e independently of the environmental temperature of the appartus.

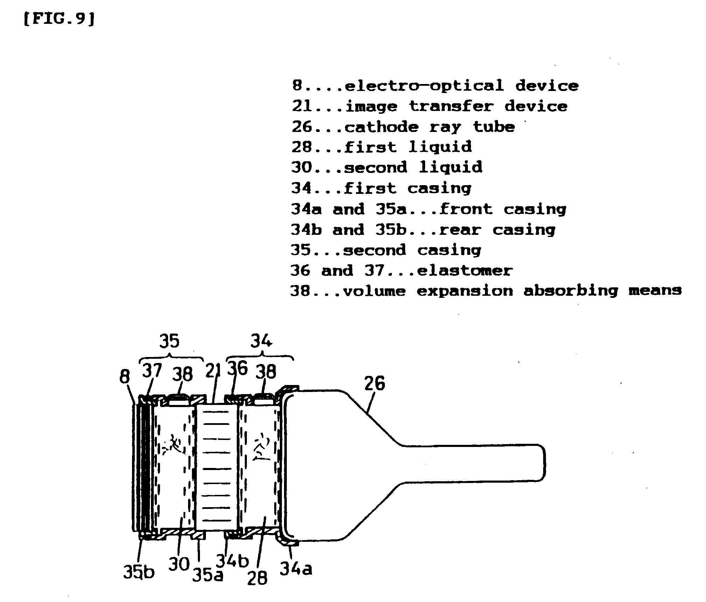

A second example of the image transfer means considering temperature compensation used in a picture display apparatus using an electro-optical device in accordance with the first exemplary embodiment of the present invention is illustrated in FIG.9.

The cathode ray tube 26 and the image transfer device 21 are combined with a first casing 34 which has apertures facing to the picture display area of the cathode ray tube and the input side effective area of the image transfer device 21 and the first casing 34 is filled with the first liquid 28 and there is no air layer between the cathode ray tube 26 and the image transfer device 21.

The image transfer device 21 and the electro-optical device 8 are similarly combined with a second casing 35 which has apertures facing to the output side effective area of the image transfer device 21 and the effective area of the photoconductive layer 8e of the electro-optical device 8. The second casing 35 is filled with the second liquid 30 and there is no air layer between the image transfer device 21 and the electro-optical device 8.

Both the first casing 34 and the second casing 35 are composed of two units. The first casing 34 is composed of a front casing 34a and a rear casing 34b. The gap between the front casing 34a and the rear casing 34b is variable on the optical axis according to the temperature variation by the help of elastomer 36 filled between the front casing 34a and the rear casing 34b.

The second casing 35 is similarly composed of a front casing 35a, a rear casing 35b and elastomer 37. Because the refractive indices of the first liquid 28 and the second liquid 30 vary according to the temperature rise and the optical distances between the cathode ray tube 26 and the image transfer device 21 and between the image transfer device 21 and the electro-optical device 8 vary, the elastomer 36 and 37 shrink in the optical axis direction to be equal to the optical distances at the room temperature.

Defining the difference of the refractive indices against liquid temperature variation as Δn, the elastomer length variation on the optical axis against elastomer temperature variation as Δd and the liquid length on the optical axial at the room temperature as d₁, the following relation is obtained.${\text{(1 - 1/Δn) (Δd + d}}_{\text{1}} {\text{) = d}}_{\text{1}}$

Thus, a good transferred image can be obtained, independently of any temperature variation.

Elastomer is not necessary to be placed at the center of the casings 34 and 35 but may be placed at the edge.

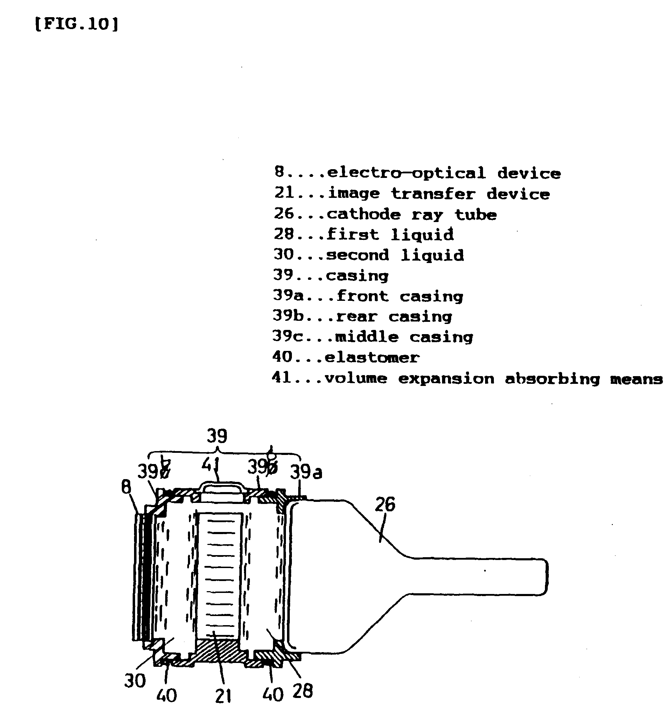

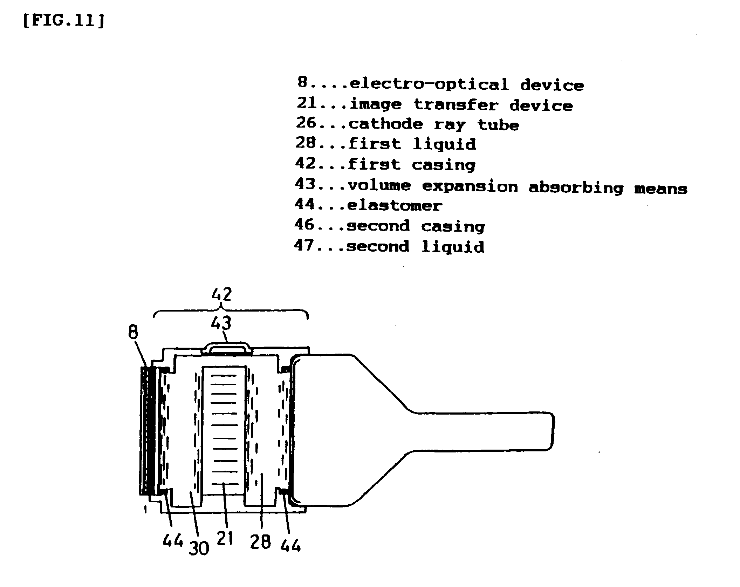

FIG.10 and FIG.11 illustrate third and fourth examples, respectively, of the image transfer means considering temperature compensation used in a picture display apparatus using an electro-optical device in accordance with the first exemplary embodiment of the present invention. The optical distance between the picture display plane of the cathode ray tube 26 and the input side of the image transfer device 21 is made to be always equal to the optical distance between the output side of the image transfer device 21 and the photoconductive layer 8e.

In the image transfer means explained in the second to fourth examples of the first exemplary embodiment, the length in the optical axis direction was varied with elastomer but it is possible to use anything whose volume varies with temperature, instead of elastomer. Otherwise, the same effect can be obtained by providing a casing whose volume is variable such as bellow mechanism and moving mechanism to absorb the variation of the optical length due to liquid temperature variation.

### (Second exemplary embodiment)

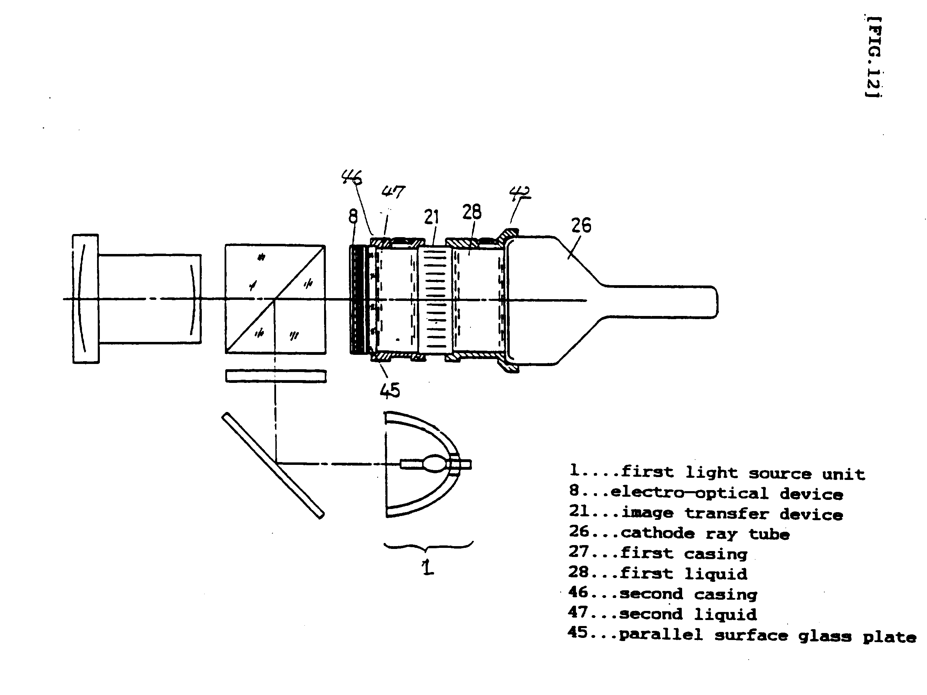

A configuration of a picture display apparatus using an electro-optical device in accordance with a second exemplary embodiment of the present invention is illustrated in FIG.12.

The second exemplary embodiment has a similar configuration to the first and the second exemplary embodiments as for a reading optical system and a cathode ray tube 26 is used as a picture display device. The cathode ray tube 26 and the image transfer device 21 are combined with a first casing 27 which has apertures facing to the picture display face of the cathode ray tube 26 and the input side effective area of the image transfer device 21 and the inside of the first casing 27 is filled with the first liquid 28 and there is no air layer between the cathode ray tube 26 and the image transfer device 21 like in the first exemplary embodiment.

On the other hand, a parallel surface glass plate 45 passing the writing light is placed on the optical axis, perpendicular to the optical axis and between the image transfer device 21 and the electro-optical device 8. The parallel surface glass plate 45 and the image transfer device 21 are combined with a second casing 46 which has apertures facing to the effective area of the parallel surface glass plate 45 and the output side effective area of the image transfer device 21 and the inside of the second casing 46 is filled with second liquid 47 and there is no air layer between the image transfer device 21 and the parallel surface glass plate 45. Here, the air gap between the parallel surface glass plate 45 and the glass basement 8f of the electro-optical device 8 is designed to be very small compared to the gap filled with the second liquid 47 between the image transfer device 21 and the parallel surface glass plate 45.

If there is some air layer between the parallel surface glass plate 45 and the electro-optical device 8, some harmful light may generate at the boundary face between the parallel surface glass plate 45 and the electro-optical device 8. When the light with very high brightness comes to the electro-optical device 8 from the first light source unit 1 as reading light, the electro-optical device 8 can not necessarily reflect the light by 100% and absorbs a part of the incoming light and the absorbed light changes to heat and heats the reading side of the electro-optical device 8. When the temperature rise is high, if the liquid is made directly contact to the writing side like the second exemplary embodiment, the temperature difference between the reading side and the writing side of the electro-optical device 8 becomes large and some stress occurs in the electro-optical device 8 and finally it may deteriorate the projected picture quality. According to the second exemplary embodiment, because the liquid does not directly contact to the electro-optical device 8, the stress in the electro-optical device 8 is suppressed to the utmost as well as the optical loss and the harmful light at the boundary surface which occur in the other image transfer means and thus, a good transferred picture is obtained.

Also in the second exemplary embodiment, it is obvious that optical performance maintaining means is applicable against the liquid temperature variation like in the first exemplary embodiment.

As explained above, according to the exemplary embodiments of the present invention, a picture display apparatus which converts the input optical image into the projected picture by photoelectric effect, using an electro-optical device having a liquid crystal layer and a photoconductive layer, comprises a plurality of graded index lenses bundled in parallel to the optical axis and an image transfer device which is placed between the electro-optical device and the picture display device so that the input image given by the picture display device is transferred in equisize onto the photoconductive layer of the electro-optical device and the whole apparatus can be made smaller without any picture quality deterioration by making small the image transfer means. At the same time, the apparatus can be made low cost by good productivity of the optical transfer devices.

As a picture display device, a cathode ray tube with a flat display face or a combination of a liquid crystal panel, a light source and light guiding means is available.

In the case using a cathode ray tube, contrast deterioration of the transferred image is prevented by filling liquid in the spaces between the picture display device and the image transfer device and between the image transfer device and the electro-optical device.

In general, when light goes into glass from the air, several percentage of the light is reflected at the boundary plane. In the present invention, the image transfer distance is short and in the case of cathode ray tube, light emitting angle is wide and the angle of the incoming light is wide. Therefore, the reflecting index at the surface of the image transfer device becomes large and the reflected light becomes harmful and it results in contrast deterioration of the transferred image. Accordingly, if the spaces between the elctro-optical device and the image transfer device and between the image transfer device and the picture display device are air, it is at least necessary to provide reflection preventing films at each light incoming surface and each light outgoing surface. However, even though reflection preventing films are provided, if the incoming light angle is large and is different from the optimum incoming angle of the reflection preventing films, the reflection preventing films are not always effective.

In the configuration in which light with a wide incoming angle comes in, there is no air layer by filling with liquid between the electro-optical device and the image tarnsfer device and between the image transfer device and the picture display device. Because the refractive index of the liquid is chosen nearer to that of glass than that of air, the reflection at the glass surface can be remarkably reduced. At thie time, the refractive index of the liquid varies when the liquid temperature varies due to some cause and the optical path length varies and as a result, the picture resolution deteriorates. Especially, in the case in which an image transfer device composed of a plurality of graded index lenses is used, the transferred image is composed of the overlapped transferred image by some of the graded index lenses and if the transferred image size differs from the equisize the image is synthesized with deviated transferred position from lens to lens and remarkable picture quality deterioration occurs. To suppress the picture quality deterioration due to this cause minimum, it is necessary to place the image transfer device at the center so that the distance from the photoconductive layer of the electro-optical device is equal to the distance from the picture display surface of the picture display device. Practically, the refractive index value of the liquid between the image transfer device and the electro-optical device must be equal to the refractive index value of the liquid between the picture display device and the image transfer device, that is, the temperature of the two liquid must be kept same. Therefore, the liquid between the image transfer device and the electro-optical device and the liquid between the picture display device and the image transfer device are designed to be convectable.

The image transfer means is formed so that without filling both spaces with liquid, the space between the electro-optical device and the image transfer device is filled with liquid and the space between the image transfer device and the picture display device is filled with air as it is and the mechanical distance between the image transfer device and the picture display device is adjustable or the mechanical distance between the electro-optical device and the image transfer device is adjustable. In addition, because the image transfer means is formed so that the space between the parallel surface glass plate provided between the electro-optical device and the image transfer device and the picture display device is filled with liquid and the liquid can convect, a good picture can be obtained on the screen independently of the temperature rise.

## Claims

1. A picture display apparatus using an electro-optical device comprising:
a picture display device (26);
an image transfer device (21) composed of a plurality of elongate lenses (22) bundled in parallel to their optical axes;
an electro-optical device (8) composed of a liquid crystal layer and a photoconductive layer;
said electro-optical device (8) being arranged to convert an input optical image from said picture display device transferred via said image transfer device to a projected picture by exploiting the photoelectric effect, and wherein
said image transfer device is placed in the optical path between said electro-optical device (8) and said picture display device, characterised in that
said plurality of lenses (22) is a plurality of graded index lenses, and in that
a liquid layer (28) is provided between the image transfer device (21) and the picture display device (26) so that the picture on the display device is transferrable in equisize onto said photoconductive layer of said electro-optical device (8).

2. An apparatus according to claim 1, wherein a further liquid layer (30) is provided between said electro-optical device (8) and said image transfer device (21).

3. An apparatus according to claim 1 or 2, wherein the or each liquid layer comprises a liquid filled between parallel glass plates (27,29).

4. An apparatus according to claim 1, 2 or 3, wherein said picture display device is a cathode ray tube (26) with a flat display face.

5. An apparatus according to claim 1, 2 or 3, wherein said picture display device comprises a liquid crystal panel, a light source and light guiding means.

6. An apparatus according to any one of the preceding claims, wherein light absorbing material (23) is filled between adjacent ones of said plurality of lenses (22) of the image transfer device (21).

7. An apparatus according to any one of the preceding claims, wherein the or each liquid layer (28,30) is formed by a casing (32) which seals said liquid, and the size of said casing (32) is arranged such that said liquid can circulate due to convection.

8. An apparatus according to any one of the preceding claims, wherein elastomer (30;36;40;44) is provided at or between casing means arranged between said image transfer device (21) and said picture display device (26) so that the mechanical distance between the devices (21,26) is auto-adjustable, to enable auto-compensation of thermo-optical effects in relation to said liquid.

## Patentansprüche

1. Eine Bildanzeigevorrichtung, die eine elektrooptische Einrichtung verwendet, die umfaßt:
eine Bildanzeigeeinrichtung (26);
eine Bildübertragungseinrichtung (21), die aus einer Mehrzahl länglicher Linsen (22) gebildet ist, die parallel zu ihrer optischen Achse gebündelt sind;
eine elektrooptische Einrichtung (8), die aus einer Flüssigkristallschicht und einer photoleitfähigen Schicht gebildet ist;
die genannte elektrooptische Einrichtung (8) ist angeordnet, ein optisches Eingangsbild von der genannten Bildanzeigeeinrichtung, das über die genannte Bildübertragungseinrichtung übertragen worden ist, in ein projiziertes Bild durch Ausnutzung der photoelektrischen Wirkung umzuwandeln, und wobei
die genannte Bildübertragungseinrichtung in dem optischen Weg zwischen der genannten elektrooptischen Einrichtung (8) und der genannten Bildanzeigeeinrichtung angeordnet ist, dadurch gekennzeichnet, daß
die genannte Mehrzahl Linsen (22) eine Mehrzahl Gradientenindexlinsen ist, und daß
eine Flüssigkeitsschicht (28) zwischen der Bildübertragungseinrichtung (21) und der Bildanzeigeeinrichtung (26) vorgesehen ist, so daß das Bild auf der Anzeigeeinrichtung in gleicher Größe auf die genannte photoleitfähige Schicht der genannten elektrooptischen Einrichtung (8) übertragbar ist.

2. Eine Vorrichtung gemäß Anspruch 1, wobei eine weitere Flüssigkeitsschicht (30) zwischen der genannten elektrooptischen Einrichtung (8) und der genannten Bildübertragungseinrichtung (21) vorgesehen ist.

3. Eine Vorrichtung gemäß Anspruch 1 oder 2, wobei die oder jede Flüssigkeitsschicht eine Flüssigkeit umfaßt, die zwischen parallele Glasplatten (27, 29) gefüllt ist.

4. Eine Vorrichtung gemäß Anspruch 1, 2 oder 3, wobei die genannte Bildanzeigeeinrichtung eine Kathodenstrahlröhre (26) mit einer flachen Anzeigeseite ist.

5. Eine Vorrichtung gemäß Anspruch 1, 2, 3, wobei die genannte Bildanzeigeeinrichtung eine Flüssigkristalltafel, eine Lichtquelle und eine Lichtleiteinrichtung umfaßt.

6. Eine Vorrichtung gemäß irgendeinem der vorhergehenden Ansprüche, wobei das Lichtabsorptionsmaterial (23) zwischen benachbarten der genannten Mehrzahl Linsen (22) der Bildübertragungseinrichtung (21) gefüllt ist.

7. Eine Vorrichtung gemäß irgendeinem der vorhergehenden Ansprüche, wobei die oder jede Flüssigkeitsschicht (28, 30) durch ein Gehäuse (32) gebildet ist, das die genannte Flüssigkeit abdichtet, und die Größe des genannten Gehäuses (32) ausgebildet ist, daß die genannte Flüssigkeit aufgrund von Konvektion umlaufen kann.

8. Eine Vorrichtung gemäß irgendeinem der vorhergehenden Ansprüche, wobei ein Elastomer (30; 36; 40; 44) bei oder zwischen der Gehäuseeinrichtung vorgesehen ist, die zwischen der genannten Bildübertragungseinrichtung (21) und der genannten Bildanzeigeeinrichtung (26) angeordnet ist, so daß der mechanische Abstand zwischen den Einrichtungen (21, 26) selbsteinstellbar ist, um einen Selbstausgleich der thermo-optischen Wirkungen in bezug auf die genannte Flüssigkeit zu ermöglichen.

## Revendications

1. Appareil d'affichage d'image utilisant un dispositif électro-optique comprenant :
un dispositif d'affichage d'image (26) ;
un dispositif de transfert d'image (21) constitué par une pluralité de lentilles allongées (22) regroupées en faisceau parallèlement à leurs axes optiques ;
un dispositif électro-optique (8) constitué par une couche de cristaux liquides et par une couche photoconductrice ;
ledit dispositif électro-optique (8) étant agencé pour convertir une image optique d'entrée provenant dudit dispositif d'affichage d'image et transférée par l'intermédiaire dudit dispositif de transfert d'image selon une image projetée en exploitant l'effet photoélectrique ; et
dans lequel :
ledit dispositif de transfert d'image est placé dans le chemin optique entre ledit dispositif électro-optique (8) et ledit dispositif d'affichage d'image,
caractérisé en ce que :
les lentilles de ladite pluralité de lentilles (22) sont constituées par des lentilles à indice progressif ; et
en ce que :
une couche de liquide (28) est prévue entre le dispositif de transfert d'image (21) et le dispositif d'affichage d'image (26) de telle sorte que l'image sur le dispositif d'affichage puisse être transférée de façon équidimensionnelle sur ladite couche photoconductrice dudit dispositif électro-optique (8).

2. Appareil selon la revendication 1, dans lequel une couche de liquide supplémentaire (30) est prévue entre ledit dispositif électro-optique (8) et ledit dispositif de transfert d'image (21).

3. Appareil selon la revendication 1 ou 2, dans lequel la couche de liquide ou chaque couche de liquide comprend un liquide rempli entre des lames en verre parallèles (27, 29).

4. Appareil selon la revendication 1, 2 ou 3, dans lequel ledit dispositif d'affichage d'image est un tube à rayons cathodiques (26) muni d'une face d'affichage plane.

5. Appareil selon la revendication 1, 2 ou 3, dans lequel ledit dispositif d'affichage d'image comprend un panneau à cristaux liquides, une source de lumière et un moyen de guidage de lumière.

6. Appareil selon l'une quelconque des revendications précédentes, dans lequel un matériau absorbeur de lumière (23) est rempli entre celles adjacentes de ladite pluralité de lentilles (22) du dispositif de transfert d'image (21).

7. Appareil selon l'une quelconque des revendications précédentes, dans lequel la couche de liquide ou chaque couche de liquide (28, 30) est formée par un boîtier (32) qui assure l'étanchéité dudit liquide, et la dimension dudit boîtier (32) est agencée de telle sorte que ledit liquide puisse circuler du fait de la convexion.

8. Appareil selon l'une quelconque des revendications précédentes, dans lequel un élastomère (30 ; 36 ; 40 ; 44) est prévu au niveau de ou entre des moyens de boîtier agencés entre ledit dispositif de transfert d'image (21) et ledit dispositif d'affichage d'image (26) de telle sorte que la distance mécanique entre les dispositifs (21, 26) puisse être auto-réglée afin de permettre une auto-compensation d'effets thermo-optiques en relation avec ledit liquide.
